# EUROPEAN PATENT SPECIFICATION

(11) **EP 0 488 973 B1**
(45) Date of publication and mention of the grant of the patent: **27.09.1995**
(21) Application number: 91830525.1
(22) Date of filing: 29.11.1991
(51) Int. Cl.: H05F 3/00, B64G 1/66

(54) **Electron gun device for controlling the potential of a body in space**
Elektronenkanone zur Steuerung des Potentials eines Körpers im Raum
Canon à électrons pour commander le potentiel d'un corps dans l'espace

(30) Priority: 30.11.1990 IT 953490
(43) Date of publication of application: 03.06.1992
(73) Proprietor: PROEL TECNOLOGIE S.p.A., 50125 Firenze (IT)
(72) Inventor: Cirri, Gianfranco, I-50129 Firenze (IT)
(74) Representative: Mannucci, Gianfranco, Dott.-Ing.

(56) References cited:
- FR-A- 2 590 103
- US-A- 3 733 038
- US-A- 3 984 730
- US-A- 4 824 051
- AIAA JOURNAL, vol. 2, no. 10, October 1964, pages 1835-1838; R.H. LEVY et al.: "Plasma radiation shielding"
- JOURNAL OF SCIENTIFIC INSTRUMENTS (JOURNAL OF PHYSICS E), ser. 2, vol. 1, no.9, September 1968, pages 893-901; J. ARNOULD et al.: "Les instruments de mesure à bord du satellite FR-1"

## Description

Electron guns provide an effective means for expelling from a body, for example from an orbiting space vehicle, the accumulations of negative charge which may come to be formed on said body either as a result of physical phenomena which have already been studied and verified in practice [Henry Berry Garret, THE CHARGING OF SPACECRAFT SURFACES, Reviews of Geophysics and Space Physics, Vol. 19 No 4, pages 577-616, November 1981], or as a result of experiments and operations carried out by man [NASA, TETHERS IN SPACE HANDBOOK - Second Edition May 1989].

This function is made necessary as the acquisition (on the part of an orbiting vehicle) of a negative potential with respect to the surrounding environment (in this case understood as being at zero potential) is in many cases an undesirable circumstance, as it implies either the possibility of electrical discharges between vehicle and environment or between vehicles in the docking phase and thus damage and/or disturbances to the structures and/or equipment, with particular reference to the electronic equipment, or the impairment of the pre-existing environmental conditions (body at zero potential) reducing the meaningfulness of particular scientific experiments.

From "Journal of Scientific Instruments", ser.2, vol.1, n.9, September 1968, pages 893-901, a device for controlling the potential of a body in space is known, which comprises: an electron gun with a cathode and an accelerating grid. An accelerating voltage generator is provided for accelerating the electrons emitted from the cathode. A heat generator is also provided which heats the cathode. The way in which cathode, electrode, voltage generator and vehicle are mutually connected is not disclosed in this prior art reference.

Other devices (plasma contactor) in current use in the space field for the limitation of the potential of a vehicle with respect to the surrounding environment (plasma), emit during their operation a plasma formed of ions, electrons and neutral particles of gas (for example Xe, Ar), and their use is accordingly not practicable in cases in which it is desired to minimize the impairment of the pre-existing environmental conditions.

In these cases, it is advantageous to use an electron gun, which emits only electrons and is moreover adjustable (by means of the accelerating voltage). By means of this device, it is in fact possible to expel in a controlled and controllable manner from a space vehicle (or more generally, from a body) negative charges and thus to determine the potential thereof. The negative charges are extracted from the vehicle and injected into the surrounding plasma by means of the emission of an electron beam from the gun, which is electrically connected to the vehicle in an expedient manner. The electron beam emission must take place when the gun is under appropriate vacuum conditions, and may thus advantageously be used in the space field.

The invention relates to a particular manner of using an electron gun to determine the potential of a body, with reference henceforth, on a non-limiting basis, to a space vehicle.

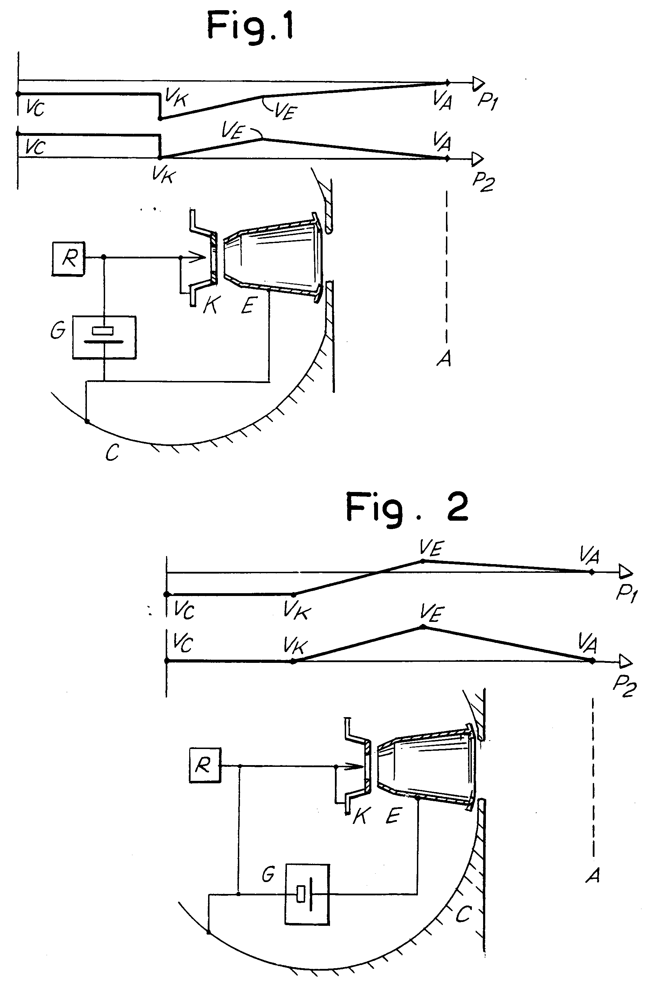

The systems employed up to now (Fig. 1) provide the interposition of a feeder (G) between the cathode (K) of the gun and the vehicle (C) (as exemplified in Fig. 1), for the purpose of bringing the cathode (K) to and maintaining it at a negative potential with respect to the vehicle (C). The accelerating electrode or electrodes (E) are connected to the potential of the vehicle (C). In such a configuration, the feeder (G) employed to stabilize between accelerating electrodes (E) and cathode (K) a potential difference accelerating the electrons, must supply all the electron current emitted by the cathode (K). Moreover, the gun-feeder system must be managed by an external intelligence which controls the times of operation thereof and the modes of application thereof, in order to avoid an uncontrolled expulsion of negative charges, which might even for example even bring the vehicle to positive potentials with respect to the surrounding environment (A), of a level equal to the accelerating potential difference imposed between vehicle and cathode. Such an event, which has already been experienced in practice, again implies the above cited disadvantages (risk of electrical discharges, impairments of physical parameters of the vehicle-environment system).

The invention relates to a different configuration of the vehicle-gun system, which permits the automatic expulsion from the body towards the anode (which may be the environment) of the surpluses of negative charges, eliminating the need for management of the system by a dedicated intelligence and moreover drastically reducing the power of the feeder which stabilizes the accelerating voltage between the accelerating or each accelerating electrode and the cathode.

These objects are obtained by the combination of features of claim 1. Further advantageous features are set forth in the dependent claims 2 to 4. Claim 5 relates to the use of the device as claimed in claim 1.

In the accompanying drawings:
Fig. 1 shows a conventional configuration;
Fig. 2 shows a basic configuration of the device according to the invention;
Fig. 3 shows a configuration with an anode in the form of a further body;
Fig. 4 shows the use of the invention in a "tethered" system;
Fig. 5 shows a solution with a switch.

The configuration (Fig. 2) provides a direct electrical connection between cathode (K) and body (C) to be controlled (we refer hereinbelow to a space vehicle still), and an accelerating voltage generator (G) directly connected between accelerating electrode or electrodes (E) and cathode (K). Thus, the cathode (K) is at vehicle (C) potential and the accelerating electrode (or electrodes) (E) is at positive potential (the accelerating voltage) with respect to the vehicle (C). In more general terms, there may be a plurality of accelerating electrodes, each one at its own positive potential with respect to the cathode.

The potential jump which at the end affects the electrons emitted by the cathode is nevertheless the potential difference between the cathode (K) and the final destination of said electrons, whether this be the surrounding environment (A) or some other physical entity. The effective attainment, on the part of the electron beam, of the final destination (i.e. expulsion without return to the vehicle) is thus linked to the vehicle (C) being at a negative potential with respect to that of the surrounding environment (A). Upon the attenuation or upon the cessation of the negative potential difference (vehicle negative with respect to the environment), the expulsion of electrons (negative charges) is attenuated or interrupted; accordingly, the system described is self-regulating. The configuration to which the present invention relates thus permits a prevention of the phenomena of negative charging on the part of a space vehicle, and a limitation of such phenomena during transients in which charges collected by the vehicle exceed the emissive capacity of the gun. Such functions are performed automatically, it being sufficient to maintain in their activated condition the various services of the gun (comprising accelerating voltage generator, heating of the cathode, possible focusing). In the configuration described, the accelerating voltage generator supplies only the current tapped off by the accelerating electrodes (leakage) rather than the entire current emitted by the cathode, permitting the use of a power of, for example, 10% of that required in the conventional configuration, when considering a gun having an efficiency of 90% (the efficiency being understood to be the ratio between the beam current downstream of the accelerating electrodes and the current emitted by the cathode).

In conclusion, the use of a device configured as in the present invention is advantageous as it permits, in particular, a saving of energy and an overall saving of hardware and software resources, which is very significant in the case of space applications on account of the consequent saving in terms of energy budget and of mass, and on account of the reduction in the complexity and the consequent increased reliability.

The invention is applicable, in general, in systems comprising a body and an electron gun (together with its services), provided that the electron gun is located under appropriate conditions of vacuum and thus, in particular, in space systems. The electrical connection between body and cathode of the gun may be of any length and constructed using any technology. The gun may be installed directly on the body or may be physically remote therefrom and connected to the latter via cables. In this second case, the system will tend to neutralize any possible negative potentials of the body with respect to the potential of the environment surrounding the gun or of whatever physical entity is acting as the final destination (anode) of the electron beam. The control of the potential of a body may thus be performed using an electron gun placed at a distance, forming an electrical connection between the two. In the case of a space vehicle divided into a plurality of metal parts with interposition between these of insulating materials, it will be necessary to connect to the cathode of the gun the metal part which it is desired to control. The anode may be the surrounding environment or another portion of said vehicle.

In more general terms, the anode may be a second space vehicle. The invention is applicable to systems comprising electron guns constructed using any technology. The cathode may be fitted on the body itself; in this case, there may be no need for an electrical connection. The gun may be equipped with one or more accelerating electrodes which are maintained at the same accelerating potential or at differing potentials. The selection of the accelerating potential or potentials to be applied to the pertinent electrode or electrodes determines the maximum beam current which the device is capable of emitting. There may or may not be a system for focusing the electron beam, depending upon the requirements and the particular demands imposed.

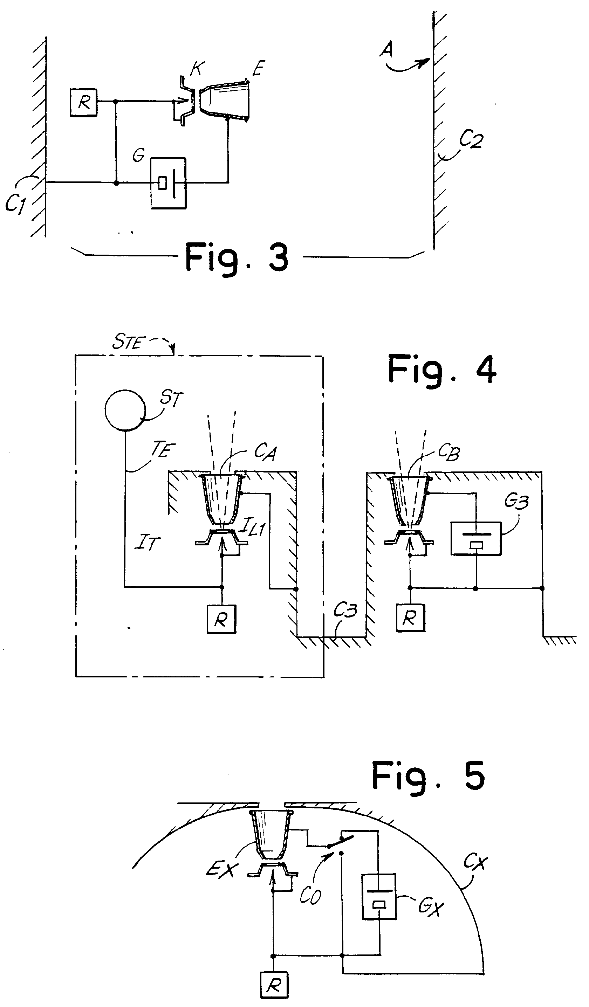

The activation of the function of control of the potential of a body in the various cases described takes place as soon as the cathode is operative and the services of the gun have been activated. It is possible to prohibit and to resume the function referred to while avoiding the deactivation and reactivation of the services of the gun on each occasion, by means of a switch (CO) connected as in Fig. 5, for switching the appropriate accelerating electrode (EX) to the voltage of the generator (GX) or to the voltage of the body (CX), so as to permit an on-off modulation of the beam. The use of the configuration described in Fig. 5 thus permits the activation (beam ON) and the deactivation (beam OFF) of the function of control of the potential of a body, or the performance of such a function by means of an ON-OFF pulsed beam.

Referring now to the drawings, Fig. 1 shows the configuration employed up to the present time. The heater R delivers the power required to bring the cathode K to operating temperature. The feeder G delivers to the accelerating electrode or electrodes E the accelerating voltage V_{E} - V_{K}. The abscissa p1 plots the variation of the potential, while the potential of the body C is such that V_{K} < V_{A}. The abscissa p2 plots the equilibrium situation (V_{K} = V_{A}): it is seen that the system tends to bring the body C to potential V_{C} > V_{A}.

Fig. 2 shows the configuration to which the present invention relates. It is seen that at the equilibrium V_{K} = V_{A}, V_{C} = V_{A} also applies. The exemplification which has been made is relative to a final situation of equilibrium (abscissa p2) attained from a disturbed situation (abscissa p1). The function of control of the potential of the body is, in fact, performed in real time in such a manner as to prevent or at least to limit the departure of the body from the situation of equilibrium in those time intervals in which said body acquires negative charges to be discharged.

Fig. 3 shows the case in which the anode A is the surface of a body C2 facing the gun (connected to the body C1). In this case, the condition to which the system tends, in the case where V_{C1} < V_{C2} is satisfied, is V_{C1} = V_{C2}.

Fig. 4 shows a "tethered" system STE, consisting of a satellite ST, a vehicle C3 and a tether TE. The gun CA re-emits into the plasma the current IT which flows in the tether TE except for the part I_{L1} which is tapped off by its accelerating electrodes. The latter part tends to charge the vehicle C3 negatively, creating a need for the use of a neutralizing device which may be the gun CB connected and conditioned as in the present invention with an assembly G3.

## Claims

1. A device for the automatic prevention and/or limitation of negative potentials (with respect to the surrounding environment), of a body, for example a space vehicle, (C;CX,C1;C3) or part of the same, said device being installed on said body and suitable to be expediently oriented, said device comprising an electron gun with a cathode (K) and at least one accelerating electrode (E;EX), a generator of accelerating positive continuous or pulsed voltage (G;GX), and a heat generator (R) to heat the cathode, wherein a direct electrical connection is provided which connects said cathode (K) to said body (C;CX;C1,C3) or part of the same by means of which the cathode (K) is kept at the same potential of said body (C;CX;C1,C3), and wherein the voltage generator (G;GX) is directly connected between the cathode and said electrode (E;EX), said voltage generator (G) keeping said electrode at a positive potential with respect to said cathode (K).

2. The device as claimed in claim 1, which device is connected to a vehicle (C3) forming part of a tethered system (STE) surrounded by a plasma, with the function of re-emitting from the vehicle (C3) towards the plasma negative charges due to either natural collection of the vehicle or experiments carried out on the tethered system by injection of negative charges on said vehicle (C3).

3. The device as claimed in claim 1 or 2, wherein the electron gun is provided with a cable for the distant connection to the body.

4. The device as claimed in one or more preceding claims, including a switch (CO) connecting said accelerating electrode (EX) to the generator (GX) in a first position of said switch, a second position of said switch for connecting said accelerating electrode (EX) to the body (CX).

5. Use of the device as claimed in claim 1, for the automatic prevention and/or limitation of negative potentials of a body or of a portion thereof with respect to the surrounding environment or another body.

## Patentansprüche

1. Vorrichtung zum automatischen Verhindern und/oder Begrenzen des negativen Potentials (bezüglich der Umgebung) eines Körpers, z.B. eines Raumfahrzeuges (C;CX;C1;C3) oder eines Teiles desselben, wobei die Vorrichtung an dem Körper montiert und geeignet orientierbar ist, und die Einrichtung eine Elektronenkanone mit einer Kathode (K) und mindestens einer Beschleunigungselektrode (E;EX), einen Generator für positive kontinuierliche oder gepulste Beschleunigungsspannung (G;GX) und einen Wärmeerzeuger (R) zum Heizen der Kathode aufweist, wobei eine direkte elektrische Verbindung vorgesehen ist, die die Kathode (K) mit dem Körper (C;CX;C1;C3) oder einem Teil desselben verbindet, wodurch die Kathode (K) auf dem gleichen Potential wie der Körper (C;CX;C1;C3) gehalten wird, und wobei der Spannungserzeuger (G;GX) direkt zwischen die Kathode und die Elektrode (E;EX) geschaltet ist und der Spannungserzeuger (G) die Elektrode auf einem positiven Potential relativ zur Kathode (K) hält.

2. Vorrichtung nach Anspruch 1, die mit einem Fahrzeug (C3) verbunden ist, welches Teil eines von Plasma umgebenen Fesselsystems (STE) ist, mit der Funktion, negative Ladungen von dem Fahrzeug (C3) zu dem Plasma hin zu re-emittieren, die entweder durch natürliche Ladungsaufnahme des Fahrzeugs oder durch Experimente entstehen, die an dem Fesselsystem durch Injektion von negativen Ladungen auf das Fahrzeug (C3) durchgeführt werden.

3. Vorrichtung nach Anspruch 2, bei dem die Elektronenkanone mit einem Kabel für die Fernverbindung mit dem Körper versehen ist.

4. Vorrichtung nach einem oder mehreren der vorhergehenden Ansprüche, mit einem Schalter (CO), der die Beschleunigungselektrode (EX) mit dem Generator (GX) in einer ersten Schalterstellung verbindet, wobei eine zweite Stellung des Schalters zum Verbinden der Beschleunigungselektrode (EX) mit dem Körper (CX) dient.

5. Verwendung der Vorrichtung nach Anspruch 1 zur automatischen Verhinderung und/oder Begrenzung von negativen Potentialen eines Körpers oder eines Teils desselben relativ zur Umgebung oder zu einem anderen Körper.

## Revendications

1. Dispositif pour la prévention et/ou la limitation automatique de potentiels négatifs (par rapport à l'environnement proche) d'un corps, par exemple d'un véhicule spatial, (C; CX, C1; C3) ou partie de celui-ci, ce dispositif étant installé sur le corps et pouvant être orienté de façon appropriée, ce dispositif comprenant un canon à électrons avec une cathode (K) et au moins une électrode d'accélération (E; EX), un générateur de tension d'accélération positive continue ou pulsée (G; GX) et un générateur de chaleur (R) pour réchauffer la cathode, dans lequel une connexion électrique directe est prévue afin de raccorder la cathode (K) au corps (C; CX; C1, C3) ou partie de celle-ci au moyen de laquelle la cathode (K) est maintenue au même potentiel du corps (C; CX; C1, C3) et dans lequel le générateur de tension (G; GX) est directement connecté entre la cathode et l'électrode (E; EX), ce générateur de tension (G) maintenant l'électrode à un potentiel positif par rapport à la cathode (K).

2. Dispositif selon la revendication 1, lequel dispositif est connecté à un véhicule (C3) faisant partie d'un système amarré (STE) entouré d'un plasma, ayant pour fonction d'émettre à nouveau à partir du véhicule (C3) en direction des charges négatives plasmiques dues soit à l'accumulation naturelle par le véhicule, soit aux expériences effectuées sur le système amarré par injection de charges négatives sur le véhicule (C3).

3. Dispositif selon la revendication 1 ou 2, dans lequel le canon à électrons est muni d'un câble pour la connexion à distance sur le corps.

4. Dispositif selon l'une quelconque des revendications précédentes, comprenant un commutateur (CO) connectant l'électrode d'accélération (EX) au générateur (GX) dans une première position de ce commutateur, une seconde position de ce commutateur connectant l'électrode d'accélération (EX) au corps (CX).

5. Utilisation du dispositif selon la revendication 1, pour la prévention et/ou la limitation automatique de potentiels négatifs d'un corps ou d'une portion de celui-ci par rapport à l'environnement qui l'entoure ou un autre corps.
